# EUROPÄISCHE PATENTSCHRIFT

(11) **EP 2 104 909 B1**
(45) Veröffentlichungstag und Bekanntmachung des Hinweises auf die Patenterteilung: **28.08.2013**
(21) Anmeldenummer: 07846929.3
(22) Anmeldetag: 30.11.2007
(51) Int. Cl.: G06K 13/08, H01R 13/629, H01R 13/635

(54) **PUSH-PUSH-MECHANISMUS INSBESONDERE STEUERKURVE FÜR EINEN PUSH-PUSH-CHIPKARTENLESER**
PUSH-PUSH MECHANISM, PARTICULARLY CONTROL CAM FOR A PUSH-PUSH CHIP CARD READER
MÉCANISME À POUSSOIR, EN PARTICULIER CAME DE COMMANDE POUR LECTEUR DE CARTE À PUCE DU TYPE À POUSSOIR

(30) Priorität: 30.12.2006 DE 102006062102; 26.01.2007 DE 102007004097
(43) Veröffentlichungstag der Anmeldung: 30.09.2009
(73) Patentinhaber: Amphenol-Tuchel Electronics GmbH, 74080 Heilbronn (DE)
(72) Erfinder: BERTSCH, Michael, Steffen, 74080 Heilbronn (DE)
(74) Vertreter: Wagner, Karl H.
(86) Internationale Anmeldenummer: PCT/EP2007/010439
(87) Internationale Veröffentlichungsnummer: WO 2008/080473

(56) Entgegenhaltungen:
- EP-A- 1 324 260
- US-A1- 2003 119 350
- US-A1- 2006 166 531
- US-B1- 6 896 555

## Beschreibung

Die Erfindung bezieht sich auf die Ausbildung einer Steuerkurve für einen Push-Push-Mechanismus, der bei verschiedenen technischen Geräten verwendet wird. Insbesondere bezieht sich die Erfindung auf einen Push-Push-Mechanismus eines Kartenlesers, und zwar insbesondere von dessen Steuerkurve. "Karte" bezieht sich dabei auf Chipkarten, Smart-Cards und SIM-Karten und andere in der Technik eingesetzte Karten.

Allgemein bezieht sich die Erfindung auf einen Push-Push-Mechanismus insbesondere für einen Kartenleser, bei dem ein durch die Steuerkurve geführter Steuer-Pin vorgesehen ist, dessen Befestigung in einem Schieber erfindungsgemäß formschlüssig erfolgt.

Weiter wird auf die Dokumente US 2003/0119350 A1, US 2006/0166531 A1, US 6,896,555 B1 und EP 1 324 260 A2 verweisen.

Ziel der vorliegenden Erfindung ist es, insbesondere einen Push-Push-Mechanismus mit Steuerkurve und Steuerpin derart vorzusehen, dass ein Kartenleser ausgestattet mit diesem Push-Push-Mechanismus eine geringe Bauhöhe sowie große Betriebssicherheit aufweist.

US 2006/0166531 A1 zeigt die Merkmale des oberbegriffs von Anspruch 1. Erfindungsgemäß erfolgt dies durch Vorsehen einer speziellen abgesetzten Geometrie der Steuerkurve, wodurch die Bauhöhe des Steuerpins und damit die Bauhöhe des Kartenlesers reduziert werden kann.

Erfindungsgemäß wird die Steuerkurve in Stufen ausgeführt, so dass der Steuerpin nur einen vordefinierten Weg zurücklegen kann und somit zwangsgeführt ist. Durch die Stufen nimmt aber, prinzipbedingt, die Bauhöhe zu. Da der verwendete Steuerpin durch Federkraft immer bestrebt ist in seine Mittelstellung zurückzukehren, sind die ersten beiden Stufen vorzugsweise von geringerer Höhe als die letzte Stufe, die für die Rückkehr des Pins in die Grundstellung notwendig ist. Um die Bauhöhe des Steuerpins und damit die Gesamtbauhöhe des Kartenlesers zu reduzieren, ist der Mittelteil der Steuerkurve in der Höhe abgesetzt, so dass das Führungsstiftende des Steuerpins nicht die Bauhöhe aller Stufen überbrücken muss, und kürzer ausgebildet sein kann.

Erfindungsgemäß wird der Steuerpin formschlüssig mit einem Schieber verbunden, der im Falle eines Kartenlesers durch das Einsetzen einer Karte betätigbar ist. Erfindungsgemäß hat aufgrund seiner Befestigung der Steuerpin einen Anschlag nach oben und den Seiten, so dass er immer versucht in die Mittelstellung zurückzukehren. Weiterhin steht der Steuerpin aufgrund einer vordefinierten Durchbiegung unter einer Vorspannung und wird dadurch permanent auf den Boden der Steuerkurve gedrückt.

Die Befestigung des Steuerpins am Schieber wird erfindungsgemäß derart vorgesehen, dass der Steuerpin in den Schieber eingeschwenkt wird, und, wie erwähnt, formschlüssig daran befestigt wird. Zu diesem Zwecke ist der Schieber unten geschlitzt und hat einen Durchbruch nach oben, so dass der Pin durch eine Schwenkbewegung in das Durchgangsloch des Schiebers gesteckt werden kann. Dabei verhindern Rastmittel vorzugsweise zwei Rastnasen am Schieber, dass sich der Pin wieder aus dem Schieber herausdrehen kann. Es wird somit kein zusätzliches Federelement betätigt, welches den Pin auf den Boden der Steuerkurve drückt. Bevorzugte Ausgestaltungen der Erfindung ergeben sich insbesondere aus den Ansprüchen.

Weitere Vorteile, Ziele und Einzelheiten der Erfindung ergeben sich aus der Beschreibung von Ausführungsbeispielen anhand der Zeichnung; in der Zeichnung zeigt:
- Fig. 1: eine schematische Draufsicht schräg von oben auf einen Chipkartenleser;
- Fig. 2: eine Ansicht auf den Chipkartenleser gemäß Fig. 1 und zwar auf dessen Unterseite schräg von oben
- Fig. 3: eine schematische Teilansicht eines Kontaktträgers eines Chipkartenleser der Figuren 1 und 2, wobei insbesondere der Push-Pull-Mechanismus dargestellt ist;
- Fig.4: eine schematische, allerdings zerteilte, Darstellung des Push-Pull-Mechanismus der Figur 3, und zwar ohne wesentliche Teile des Kontaktträgers;
- Fig. 5 - 11: erfindungsgemäße Einzelheiten des Steuerpins und des Schiebers sowie deren formschlüssige Verbindung, dabei zeigt im Einzelnen

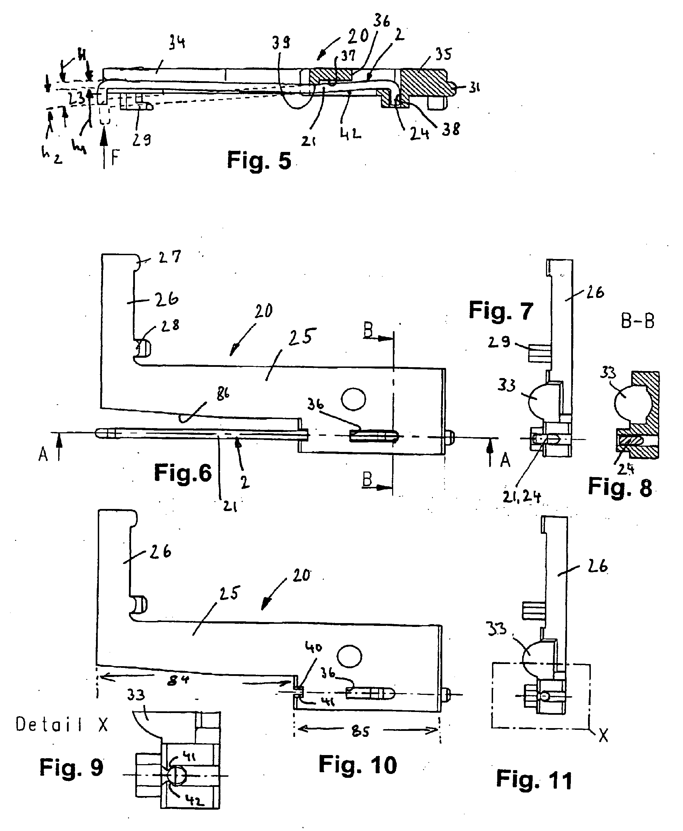

- Fig. 5: einen Schnitt in etwa längs Linie A-A in Fig. 6,
- Fig. 6: eine Draufsicht, auf den Schieber mit formschlüssig verbundenem Steuerpin, gemäß Fig. 5;
- Fig. 7: eine Seitenansicht des Schiebers und des Steuerpins von links in Fig. 6;
- Fig. 8: einen Schnitt B-B in Fig. 6;
- Fig. 9: eine Einzelheit der Fig. 11;
- Fig. 10: eine Draufsicht auf den Schieber gemäß Fig. 6, aber ohne eingesetzten Steuerpin;
- Fig. 11: eine Seitenansicht des Schiebers gemäß Fig. 10 von links;

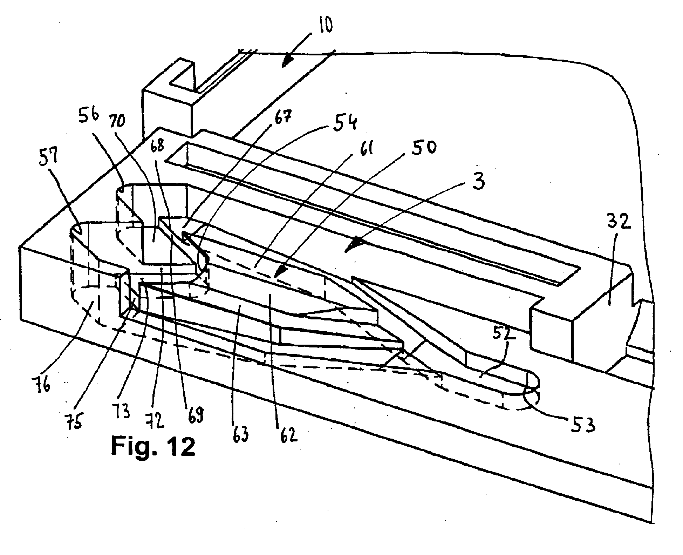

- Fig. 12 - 17: erfindungsgemäße Einzelheiten der Steuerkurve, dabei zeigt im Einzelnen:

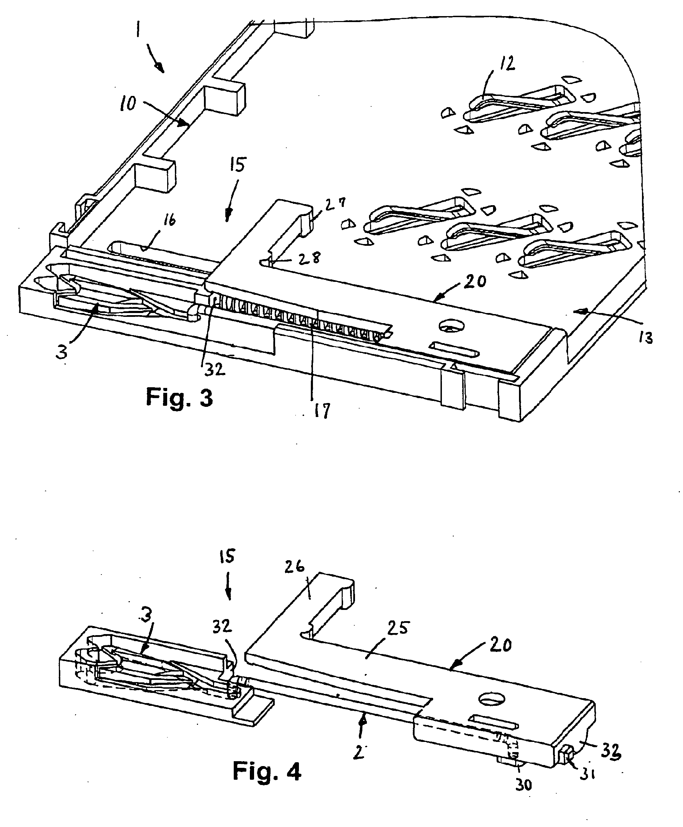

- Fig. 12: eine vergrößerte Draufsicht auf die Steuerkurve, gemäß Fig. 3, ebenfalls von schräg rechts oben;

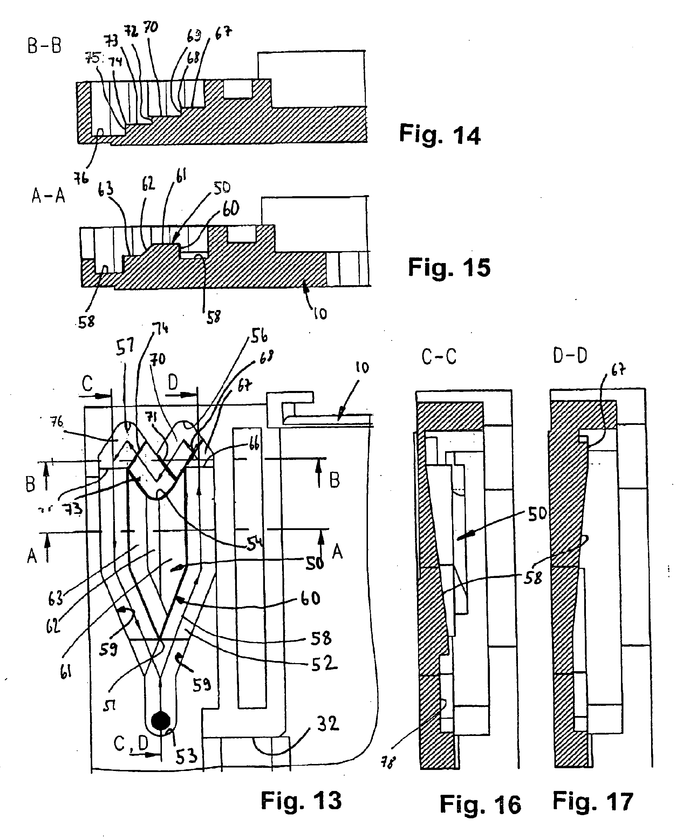

- Fig. 13: eine Draufsicht auf die Steuerkurve gemäß Fig. 3;
- Fig. 14: einen Schnitt längs Linie in A-A in Fig. 13;
- Fig. 15: eine Schnitt längs Linie in B-B in Fig. 13;
- Fig. 16: eine Schnitt längs Linie C-C in Fig. 13; und
- Fig. 17: eine Schnitt längs Linie D-D wie in Fig. 13.

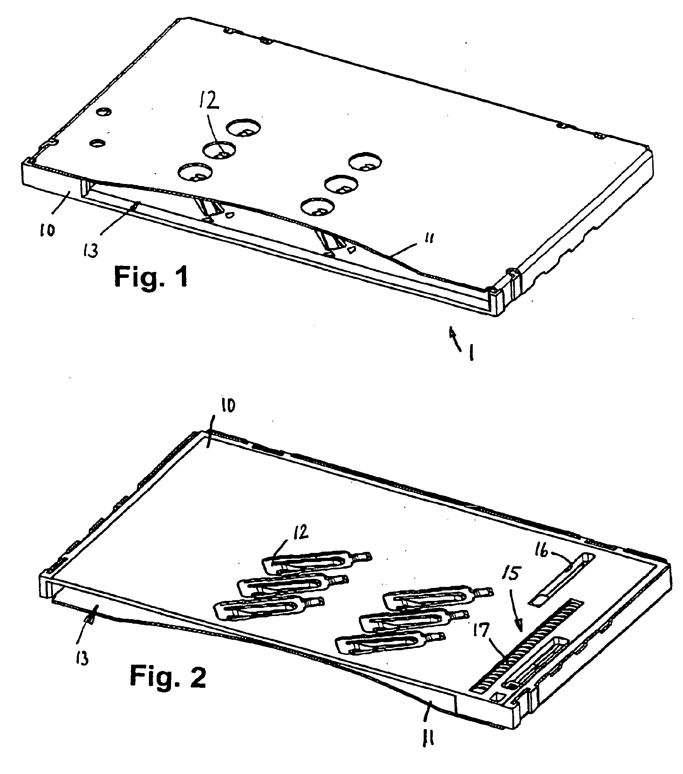

In den Figuren 1 und 2 ist ein Kartenleser 1 gezeigt. Der Kartenleser 1 ist vorzugsweise ein Chipkartenleser, ein Smart-Card-Connector oder ein SIM-Kartenleser, allgemein ein Leser, der dazu dient, eine elektrische Kontaktgabe mit einem kartenförmigen Teil vorzusehen.

Der erfindungsgemäße Kartenleser 1 besteht vorzugsweise aus einem Kontaktträger 10, der durch einen Deckel 11 abgeschlossen ist, wobei im Kontaktträger 10, Kontaktelemente 12 zur Kontaktgabe mit den auf einer eingesetzten Karte befindlichen Kontakten vorgesehen sind. Ein Einschubschlitz 13 ermöglicht es die nicht gezeigte Karte in den Kartenleser 1 einzusetzen. In Fig. 2 sind Teile, nämlich eine Vorspannfeder 17 sowie ein Führungsschlitz 16 eines Push-Push-Mechanismus 15 angedeutet, d.h. eines Mechanismus 15 der für Push-Push-Kartenleser charakteristisch ist.

Ein Push-Push-Kartenleser 1 wird im Allgemeinen derart betätigt, dass man die Karte entgegen einem Federdruck durch den Einschubschlitz 13 in den Kartenleser hineinschiebt (push) bis die Karte in ihrer Lesestellung in dem Kartenleser 1 verrastet. Die Karte verbleibt dann in ihrer Lesestellung bis wiederum auf die Karte gedrückt wird (push), was deren Herausführen aus der Lesestellung bewirkt, wobei die Karte, soweit sie den Leser 1 nicht verlassen hat, herausgezogen werden kann.

Diese Push-Push-Betriebsart wird durch den Push-Push-Mechanismus 15 ermöglicht, Push-Push-Mechanismen 15 sind beispielsweise auch in anderen Geräten der Technik bekannt, beispielsweise bei Schaltern oder Kugelschreibern usw. Was den hier offenbarten Push-Push-Mechanismus 15 anlangt, so ist dieser unter entsprechenden Modifikationen auch bei diesen anderen technischen Geräten einsetzbar, vorzugsweise aber auf dem Gebiet der Kartenleser 1. Die folgende Beschreibung konzentriert sich daher auf die Beschreibung des Push-Push-Mechanismus 15 im Zusammenhang mit einem Kartenleser 1.

Wie bereits einleitend erwähnt, ist die vorliegende Erfindung bestrebt, eine geringe Bauhöhe eines einen Teil des Push-Push-Mechanismus 15 bildenden Steuerpins und eine geringe Bauhöhe des Kartenlesers 1 insgesamt zu erreichen, wobei insbesondere der Mittelteil der Steuerkurve in der Höhe abgesetzt ist, so dass der Steuerpin nicht die Bauhöhe aller Stufen der Steuerkurve überbrücken muss. Weiterhin ist eine formschlüssige Verbindung des Steuerpins mit einem einen Teil der Push-Push-Mechanismus 15 bildenden Schieber 20 sowie dessen Vorspannung von Wichtigkeit.

In der vorliegenden Beschreibung wird zunächst anhand der Figuren 3 und 4 der allgemeine Aufbau, wesentlicher Teil des Kartenlesers 1 und des Push-Push-Mechanismus 15 erläutert und sodann wird anhand der Figuren 5 - 11 eine bevorzugte Ausbildung von Schieber- und Steuerpin beschrieben und abschließend dann anhand der Figuren 12 - 17 der erfindungsgemäße Aufbau der Steuerkurve.

Unter Bezugnahme auf die Figuren 3 und 4 sei ein Überblick über die die Erfindung kennzeichnenden Merkmale des Push-Push-Mechanismus 15 gegeben. In Fig. 3 erkennt man den Kartenleser 1 von dem nur ein Teil des Kontaktträgers 10 dargestellt ist und aus dessen Kartenauflagefläche Kontaktelemente 12 herausragen. Die nicht gezeigte Karte kann in den Einschubschlitz 13 eingeschoben werden, gleitet dann über die Kontaktkuppen der Kontaktelemente 12 und erreicht dann mit ihrer Vorderkante den bereits erwähnten Schieber 20, der durch die Feder 17 in die in Fig. 3 gezeigte Position vorgespannt ist.

Bei einem weiteren Hineinschieben der Karte in den Einschubschlitz 13 wird der Schieber 20 entgegen der Kraft der Vorspannfeder 17 mitgenommen, bis schließlich die Lesestellung der Karte erreicht wird, in der die Kontaktkuppen der Kontaktelemente 12 die entsprechenden Kontaktflächen auf der Karte kontaktieren. In dieser Lesestellung erfolgt eine Verrastung des Schiebers 20.

Nach Beendigung des Lesevorgangs wird wiederum auf die im Allgemeinen aus dem Einschubschlitz 13 vorstehende Kante der Karte gedrückt, die Verriegelung gelöst, worauf der Schieber 20 durch die Wirkung der Vorspannfeder 17 die Karte aus dem Einschubschlitz 13 herausschiebt.

Der beschriebene Push-Push-Vorgang wird durch den Push-Push-Mechanismus 15 ermöglicht, der insbesondere durch welche den Schieber 20, einen Steuerpin 2 und eine Steuerkurve 3 gebildet wird.

### Der Schieber 20 und der Steuerpin 2 (Figuren 5 -11)

Der Schieber 20 weist einen Längsarm 25 sowie einen quer dazu verlaufenden Einsteckrichtung hinten liegenden Querarm oder Kartenandrückerarm 26 auf an dem beabstandete Kartenanlagevorsprünge 27 und 28 vorgesehen sind. Im Bereich des Kartenanlagevorsprungs 28 ist ferner ein - vergleiche Fig. 7 - nach unten ragendes Führungselement 29 vorgesehen, welches in den bereits erwähnten im Kontaktträger 10 ausgebildeten Führungsschlitz 16 ragt, so dass beim Einschieben einer Karte der Schieber 20 nicht verkippt.

Der Längsarm 25 weist (vgl. dazu Fig. 10) vorzugsweise einen ersten schmäleren Abschnitt 84 und einen zweiten breiteren Lagerabschnitt 85. Auf diese Weise wird ein Ausschnitt oder Raum 86 gebildet in dem sich der Steuerpin 2 parallel zum ersten schmäleren Abschnitt 84 erstreckt.

Im Bereich des breiteren Lagerabschnittes 85 ist, Wie in Fig. 4 und 5 gezeigt, ein nach unten ragendes in einen entsprechenden Schlitz im Kontaktträger sich erstreckendes Führungselement 30 für den Schieber 20 angeordnet. Ferner ist ebenfalls im breiteren Lagerabschnitt 85 wie in Fig. 4, 5, 6 und 10 gezeigt ein Anlageelement 31 in Fig. 4 seitlich nach rechts ragend angeordnet und zwar benachbart zu einer Federanlage 33. Die Vorspannfeder 17 liegt einmal an der Innenfläche (vergleiche Fig. 7) dieser Federanlage 33 gebildet vom Schieber 20 an und zum anderen an der stationären vom Kontaktträger 10 gebildeten Federanlage 32, vergleiche Figur 3, 4 und 12.

Der Steuerpin 2 besteht, wie in Fig. 5 gezeigt, vorzugsweise aus einer im Querschnitt runden Federstahlstange. Der Steuerpin 2 bildet ein Längsteil 21 und ist an seinen beiden Enden abgebogen. An dem einen Ende des Längsteils 21 ist, ein um etwa 45° abgewinkeltes Führungsstiftende 23 mit einer Höhe h2 gebildet und am anderen, entgegengesetzten Ende des Längsteils 21 wird ein Haltestiftende 24 gebildet. Die Höhe oder Dicke des Längsteils 21 ist mit h1 bezeichnet. Die Gesamthöhe des Steuerpins 2 im Bereich des Führungsstiftendes 23 ist mit H bezeichnet.

Erfindungsgemäß ist der Steuerpin 2 im Bereich des Führungsstiftendes 23 verkürzt. Die Gesamthöhe des Lesers 1 ergibt sich aus der Höhe h2 + h1 des Führungsstiftendes 23 + Höhe der Stufen.

Im Bereich des breiteren Lagerabschnitts 85 ist, wie in Fig. 5 gezeigt, eine Durchbruchöffnung 36 ausgebildet, die die Verbindung zu einem in Fig. 5 nicht näher bezeichneten von unten her im Lagerabschnitt 85 ausgeformten Schlitz herstellt, der seitliche Anschläge oder Führungswände 42 für den Steuerpin 2 bildet. Ferner bildet, wie in Figur 5 gezeigt, der Lagerabschnitt 85 einen Anschlag oder eine Anschlagfläche 39.

Im Bereich der Durchbruchöffnung 36 ist - vergleiche Fig. 5 - darunterliegend und nach rechts gegenüber dem Schlitz 37 gemäß Fig. 5 versetzt, ein Durchgangsloch 38 vorhanden.

Beim Einsetzen des Steuerpins 2 in die in Fig. 5 gezeigte Stellung wird der Steuerpin 2 in den Schieber 20 eingeschwenkt und formschlüssig befestigt. Dadurch, dass der Schieber 20 unten geschlitzt ist, und den Durchbruch nach oben aufweist, kann der Steuerpin 2, d.h. sein Haltestiftende 24 durch eine Schwenkbewegung durch das Durchgangsloch 38 des Schiebers 20 gesteckt werden. Dabei wird in der in Fig. 5 gezeigten Position durch Rastmittel vorzugsweise die zwei am Schieber 20 vorhandenen Rastnasen 40, 41 (vergleiche Fig. 10) verhindert, dass sich der Steuerpin 2 wieder aus dem Schieber 20 herausdrehen kann.

Durch die erfindungsgemäße Konstruktion wird erreicht, dass kein zusätzliches Federelement benötigt wird, welches den Steuerpin 2 mit seinem Führungsstiftende 23 auf den Boden der Steuerkurve 3 drückt. Dies wird eben dadurch erreicht, dass der Steuerpin 2 aufgrund der beim Einsetzen vordefinierten Durchbiegung unter einer Vorspannung steht und dadurch permanent in Richtung des Bodens der Steuerkurve 3 gedrückt wird.

### Die Steuerkurve 3; vergleiche Figuren 12 - 17

Die in Fig. 5 veranschaulichte geringe Bauhöhe des Steuerpins 2 wird aufgrund der speziellen, abgesetzten Geometrie der Steuerkurve 3 erreicht, auf welche Weise die Bauhöhe des Kartenlesers reduziert wird. Die Steuerkurve 3, allgemeiner ausgedrückt, die Steuerkurvenanordnung 3, weist einen in einem benachbarten vorzugsweise integral mit dem Kontaktträger 10 geformten Abschnitt einen Führungsschlitz 52 auf, in den das Führungsstiftende 23 des Steuerpins 2 geführt laufen kann. Der Führungsschlitz 52 läuft - vergleiche beispielsweise Fig. 12 und 13 - von einer die Grundstellung 53 bis Führungsstiftendes bzw. des Steuerpins 2 definierenden Position aus, ist sodann leicht nach rechts (Fig. 13) abgewinkelt und verläuft gradlinig und danach nach links abgewinkelt zu einer ersten Anschlagposition 56 sodann zu einer Rastposition 54 und dann wieder nach links zu einer zweiten Anschlagposition 57 von wo aus der Führungsschlitz dann anfangs nach links abgewinkelt und dann geradlinig und schließlich wiederum nach rechts abgewinkelt und schließlich geradlinig die Rückführung zu Grundstellung 53 erfolgt. Der Verlauf des Führungsschlitzes 52 im Bereich der Rastanschläge 56, 57 und der Rastposition 54 ist dabei im Ganzen M-förmig.

Durch den beschriebenen Verlauf des Führungsschlitzes 52 wird der erwähnte Mittelteil 50 der Steuerkurve 3 definiert.

Die durch den Führungsschlitz 52 ermöglichte Laufbahn 58 des Führungsstiftendes 23 am Boden des Führungsschlitzes 52 ist durch die mit Pfeilen versehene Linie 58 gekennzeichnet. Die Führung des Führungsstiftendes 23 erfolgt bei dessen Bewegung entlang der Laufbahn 58 durch eine äußere beispielsweise von dem Abschnitt des Kontaktträgers 10 gebildete Führungsbahn 59 und eine innere Führungsbahn 60, die vom Mittelteil 50 gebildet wird.

Erfindungsgemäß hat um eine geringe Bauhöhe des Steuerpins 2 und damit des Kartenlesers 1 insgesamt zu erreichen, der Mittelteil 50 keine konstante Höhe. Sondern der Mittelteil 50 weist unterschiedliche Höhenabschnitte 61, 62 und 63 auf, deren jeweilige Höhen unterschiedlich - wie gezeigt - gewählt sind, so dass zum Einen ausreichende Stufenhöhen möglich sind, gleichzeitig zum Anderen aber eine reduzierte Bauhöhe des Steuerpins 2 erreicht wird. Dabei wird die Höhe des Mittelteils 50 in den Bereichen zurückgenommen, wo die Bauhöhe des Mittelteils 50 die Bewegung des Steuerpins 2 insbesondere von dessen Längsteil 21 behindern würde.

Dies hier Beschriebene und in den Figuren gezeigte Ausführungsbeispiel beruht auf der Erkenntnis, dass die Stufenhöhe nur unwesentlich reduziert werden kann, ohne dass der Steuerpin 2 eventuell unbeabsichtigt über eine Stufe mit zu geringer Höhe wieder zurückrutschen kann, wobei die Möglichkeit bleibt, die Gesamthöhe weiter zu reduzieren, wenn die Höhe (Länge) des Führungsstiftendes reduziert wird. Dies ist aber nur bedingt möglich, da die Geometrie der Steuerkurve hier mit Mittelbereich hindert.

Erfindungsgemäß wurde im gezeigten Ausführungsbeispiel die Steuerkurve abgesetzt. Alternativ, kann gemäß einem zweiten, nicht zeichnerisch dargestellten Ausführungsbeispiel der Mittelbereich 50 und dort insbesondere der Bereich 62 entfallen. Dies kann beispielsweise auch dadurch geschehen, dass eine umlaufende Wand die gesamte Steuerkurve zum Mittelbereich 50 hin begrenzt, und diese umlaufende Wand im Bereich der Stufen in gleicher Weise abgesetzt, gestaltet ist.

Die innere Führungsbahn 60 könnte auch durch eine schmale, entsprechend der Form der inneren Führungsbahn 60 umlaufende Wand gebildet sein.

Es ist jedoch vorteilhaft, den Innenbereich stoff-füllend auszugestalten, da dies die Stabilität der Steuerkurve erhöht.

Es sei nun der Verlauf der Laufbahn 58 für das Führungsstiftende 23, d.h. den Steuerpin 2 betrachtet.

Bei nicht betätigtem Kartenleser 1 befindet sich in Folge des Drucks der Feder 17, der Schieber 20 und somit der schematisch durch einen dunklen Punkt in Fig. 13 gezeigte Führungsstift 2 bzw. das Führungsstiftende 23 im Anschlag an der äußeren Führungsbahn 59 in der Grundstellung 53. Beim Einstecken einer Karte in den Kartenschlitz 13 wird der Schieber 20 zusammen mit dem Steuerpin 2 verschoben, wobei dessen Führungsstiftende 23 gegen die Oberfläche des Führungsschlitzes 52 vorgespannt ist. Beim weiteren Einschieben der Karte trifft das Führungsstiftende 22 auf eine derart geformte Vorderkante 51 des Mittelteils 50 das eine Schrägablenkung des Endes 23 erfolgt und dieses läuft, wie in Fig. 17 gezeigt, auf dem Schlitzboden nach oben zu einer im Wesentlichen eben verlaufenden Ausgangsfläche 67 im Bereich einer Scheitellinie 66. Bei der weiteren Bewegung des Schiebers 20 läuft das Führungsstiftende 23 geführt insbesondere von der äußeren Führungsbahn 59 zum An-schlag 56 um dabei über eine erste Stufe, gebildet durch eine Stufenkante 68, eine Stufenhöhe 69 und eine Stufenfläche 70 auf eben dieser Stufenfläche 70 zu landen.

Nachdem nunmehr im Allgemeinen der Druck auf den Schieber 20 von Hand unterbleibt, bewegt sich das Führungsstiftende 23 aufgrund der Kraft der Feder 17 über eine zweite Stufe zur Rastposition 54 hin und sitzt dann auf einer tiefer gelegenen zweiten Stufenfläche 73, der zweiten Stufe, die eine zweite Stufenkante 71 und eine zweite Stufenhöhe 72 besitzt.

Um die Entnahme der Karte aus dem Kartenleser 1 einzuleiten, drückt (push) der Benutzer wiederum gegen die Karte und verschiebt dadurch den Schieber 20 zusammen mit dem Steuerpin 2 der die Stufenhöhe 72 nicht überspringen kann, sondern von dieser und der äußeren Führungsbahn 59 geführt zum Anschlag 57 hin bewegt wird. Dabei springt das Führungsstiftende 23 von der zweiten Stufenfläche 73 über die von der dritten Stufenkante 74 der dritten Stufenhöhe 75 und der dritten Stufenfläche 76 gebildeten dritten Stufe nach unten auf eben die dritte Stufenfläche 76.

Nachdem im Allgemeinen der Benutzer im Bereich des Anschlags 57 keinen Druck mehr auf die Karte 1 ausübt, drückt die Feder 17 den Schieber 20 in Richtung der Grundstellung 53, wobei das Führungsstiftende 23 von der dritten Stufenfläche 76 aus, über die Scheitellinie 77 nach oben auf der in Fig. 16 gezeigten Laufbahn 58 läuft und schließlich in einer Vertiefung 78 (Fig. 16) im Bereich der Grundstellung 53 landet.

## Patentansprüche

1. Push-Push-Mechanismus (15) insbesondere für einen Kartenleser mit einer Steuerkurve (3) und einem Steuerpin (2), der mit der Steuerkurve (3) in Eingriff steht und mit einem mit dem Steuerpin (2) verbundenes Element, beispielsweise einem Schieber (20) wofür eine Ausgangsstellung (53) und eine Raststellung (54) definiert wird, wobei der Übergang von der Ausgangsstellung in die Raststellung (54) durch einen ersten Push und der Übergang von der Raststellung (54) in die Ausgangsstellung (53) durch einen zweiten Push auf den Steuerpin bzw. dem damit verbundenen Element (20) erfolgt,
wobei die Steuerkurve (3) in einem Bauteil beispielsweise in einem Kontaktträger (10) einen einen Mittelteil (50) bildenden geschlossenen Verlauf hat und in dem Bereich der Raststellung Stufen aufweist, **dadurch gekennzeichnet, dass** der Mettelteil in der Höhe abgesetzt ist, wodurch eine geringe Bauhöhe des Steuerpins und damit eine geringe Gesamtbauhöhe des Push-Push-Mechanismus erreicht wird.

2. Push-Push-Mechanismus (15) nach Anspruch 1, wobei in der Steuerkurve im Bereich der Raststellung (54) drei Stufen (67, 68, 69; 70, 71, 72 und 73, 74 75) vorgesehen sind.

3. Push-Push-Mechanismus (15) nach Anspruch 2, wobei die ersten beiden Stufen eine geringere Höhe besitzen als die dritte Stufe.

4. Push-Push-Mechanismus (15) nach einem der vorhergehenden Ansprüche, wobei das Mittelteil (50) mehrere unterschiedliche Höhenabschnitte (61, 62, 63) aufweist.

5. Push-Push-Mechanismus (15) nach Anspruch 4, wobei der ersten Höhenabschnitt (61), die größte Höhe besitzt und der zweiten Höhenabschnitt (62) eine geringere Höhe und der dritte Höhenabschnitt (63) schließlich eine noch geringere Höhe besitzt.

6. Push-Push-Mechanismus (15) nach einem der Ansprüch 4 oder 5, wobei der zweite Höhenabschnitt (62) schräg verlaufend ausgebildet ist.

7. Push-Push-Mechanismus (15) nach einem der Ansprüche 4 bis 6, wobei die Höhenabschnitte (61, 62, 63) derart bestimmt sind, dass zur Erreichung geringer aber wirksamer Stufenhöhen eine entsprechende Schwenkbewegung des Längsteils (21) des Steuerpins (2) durch die entsprechenden verringerten Höhenabschnitte erreicht wird.

8. Push-Push-Mechanismus (15) nach einem der vorhergehenden Ansprüche, wobei die in Stufen ausgeführte Steuerkurve (3) einen vordefinierten Weg für den Steuerpin (2) und somit die Zwangsführung des Steuerpins (2) vorsieht, wobei ferner ein Steuerpin (2) verwendet wird, der durch Federkraft bestrebt ist in seine Mittelstellung zurückzukehren, und wobei die ersten beiden Stufen von geringerer Höhe als die letzte Stufe sind, die für die Rückkehr des Steuerpins in die Ausgangs- bzw. Grundstellung notwendig ist.

9. Push-Push-Mechanismus (15) nach Anspruch 8, wobei einer oder mehrere der Höhenabschnitte in Schubrichtung variable Höhen aufweisen können.

10. Push-Push-Mechanismus (15) nach einem oder mehreren der vorhergehenden Ansprüche, wobei der Steuerpin (2) formschlüssig mit einem Schieber (20) verbunden ist.

11. Push-Push-Mechanismus (15) nach Anspruch 10, wobei der Steuerpin (2) derart am Schieber (20) befestigt ist, dass er sowohl einen Anschlag nach oben, als auch zu den Seiten besitzt, so dass der Steuerpin (2) immer versucht in seine Mittelstellung zurückzukehren.

12. Push-Push-Mechanismus (15) nach einem der Ansprüche 10 oder 11, wobei der Steuerpin (2) derart in den Schieber (20) eingesetzt ist, dass er aufgrund einer vordefinierten Durchbiegung unter einer Vorspannung permanent auf den Boden der Steuerkurve drückbar ist.

13. Push-Push-Mechanismus (15) nach der Ansprüche 10 bis 12, wobei der Schieber (20) vorne geschlitzt ist und ein Durchbruch nach oben hat, so dass der Steuerpin (2) durch eine Schwenkbewegung in ein Durchgangsloch des Schiebers (20) gesteckt werden kann.

14. Push-Push-Mechanismus (15) nach einem der Ansprüche 10 bis 13, wobei der Steuerpin (2) durch Rastmittel, beispielsweise zwei Rastnasen am Schieber verrastet ist, so dass er sich nicht aus dem Schieber herausdrehen kann, und wobei der Steuerpin (2) aus Federstahl besteht und einen Längsteil (21) mit einem Haltestiftende (24) sowie einem Führungsstiftende (23) aufweist.

15. Push-Push-Mechanismus (15) nach einem der Ansprüche 10 bis 14, wobei der Schieber (20) einen Längsarm (25) sowie einen quer dazu verlaufenden Querarm (26) besitzt, und am Schieber (20) nach unten ragende Führungselemente (beispielsweise 29) ausgebildet sind, die in entsprechende Führungsschlitze im Kontaktträger (10) laufen.

## Claims

1. A push-push mechanism (15), in particular for a card reader having a control curve (3) and a control rod (2), which is in engagement with said control curve (3), and with an element, for instance a slide (20), connected with the control rod (2), with a start position (53) and a detent position (54) defined for slide (20), wherein the transition from the start position to the detent position (54) occurs due to a first push and the transition from the detent position (54) to the start position (53) occurs due to a second push against the control pin and the element (20) connected thereto, respectively,
wherein the control curve is formed in a component, for instance in a contact support (10), has a continuous extension forming in said component a middle portion (50), and further comprises steps in the area of the detent position,
**characterized in that** said middle portion is, in its height, reduced, with the consequence that the control rod has a reduced height and thus a reduced height is achieved for the push-push mechanism.

2. The push-push mechanism (15) as set forth in claim 1, wherein, in the area of detent position (54), the control curve is provided, with three steps (67, 68, 69; 70, 71, 72 and 73, 74, 75).

3. The push-push mechanism (15) of claim 2, wherein the first two steps have a smaller height than the third step.

4. The push-push mechanism (15) of one of the preceding claims, wherein the middle portion (50) comprises a plurality of different height sections (61, 62, 63).

5. The push-push mechanism (15) of claim 4, wherein the first height section (61) has the largest height and the second height section (62) has a smaller height and the third height section (63) has a still smaller height.

6. The push-push mechanism (15) as set forth in claims 4 or 5, wherein the second height section (62) is inclined.

7. The push-push mechanism (15) of one of claims 4 to 6, wherein the height sections (61, 62), 63) are determined such that for obtaining smaller but effective step heights, a corresponding pivot movement of the longitudinal portion (21) of the control pin (2) is obtained by the correspondingly reduced height sections.

8. The push-push mechanism (15) as set forth in one of the preceding claims, wherein the control curve (3), realized in steps, provides a predefined path for the control rod (2) and thus for the effective guidance of the control rod (2), and wherein further a control rod (2) is used which, due to a spring force, aims to return to its middle position, and wherein the first two steps are of a lower height than the last step, which is required for the return of the control rod into the starting position (base position).

9. The push-push mechanism (15) of claim 8, wherein one or more of the height sections can have different heights in push direction.

10. The push-push mechanism (15) of one or more of the preceding claims, wherein the control rod (2) is connected to a slide (20) with positive locking.

11. The push-push mechanism (15) as set forth in claim 10, wherein the control rod (2) is mounted at the slide (20) such that the control rod is provided with both an abutment in upward direction as well as towards the sides such that the control rod (2) will always attempt to return to its middle or center position.

12. The push-push mechanism (15) of claim 10 or 11, wherein the control rod (2) is inserted into the slide (20) such that the control rod can be, based on a predefined bending, pressed under a pretention permanently onto the bottom of the control curve.

13. The push-push mechanism (15) as set forth in one of claims 10 to 12, wherein the slide (20) is at its front slotted and comprises a breakthrough in upward direction so that the control rod (2) can be inserted by means of a pivotal movement into a through hole (clearance hole) of the slide (20).

14. The push-push mechanism (15) as set forth in one of claims 10 to 13, wherein the control rod (2) is mounted by detent means, for instance detent noses, at the slide such that the control rod can not be rotated out of the slide, and wherein the control rod (2) is made of spring steel and comprises a longitudinal portion (21) with a mounting rod end (24) and a guide rod end (23).

15. The push-push mechanism (15) of one of claims 10 to 14, wherein the slide (20) comprises a longitudinal arm (25) as well as a transverse arm (26) extending transversely thereto, and wherein the slide (20) comprises downwardly extending guide elements (for example 29), which extend into respective guide slots in the contact support (10).

## Revendications

1. Mécanisme de type pousser-pousser (15), en particulier pour un lecteur de carte comportant une surface courbe de commande (3) et une tige de commande (2) en contact avec la surface courbe de commande (3) et avec un élément, par exemple un coulisseau (20), relié à la tige de commande (2) ayant une position de départ (53) et une position de détente (54) définies pour le coulisseau (20), dans lequel la transition de la position de départ à la position de détente (54) survient par suite d'une première poussée et la transition de la position de détente (54) à la position de départ (53) survient par suite d'une seconde poussée contre la tige de commande et l'élément (20) qui lui est relié, respectivement,
dans lequel la surface courbe de commande est formée dans un composant, par exemple un support de contact (10), comporte un prolongement continu formant dans le composant une partie médiane (50), et comprend en outre des épaulements dans la zone de la position de détente,
**caractérisé en ce que** la partie médiane est, dans sa hauteur, réduite, avec la conséquence que la tige de commande a une hauteur réduite et donc que l'on obtient une hauteur réduite pour le mécanisme de type pousser-pousser.

2. Mécanisme de type pousser-pousser (15) selon la revendication 1, dans lequel, dans la zone de la position de détente (54), la surface courbe de commande (3) est munie de trois épaulements (67, 68, 69 ; 70, 71, 72 et 73, 74, 75).

3. Mécanisme de type pousser-pousser (15) selon la revendication 2, dans lequel les deux premiers épaulements ont une hauteur plus petite que le troisième épaulement.

4. Mécanisme de type pousser-pousser (15) selon l'une quelconque des revendications précédentes, dans lequel la partie médiane (50) comprend plusieurs parties de hauteurs différentes (61, 62, 63).

5. Mécanisme de type pousser-pousser (15) selon la revendication 4, dans lequel la partie de première hauteur (61) a la plus grande hauteur, la partie de deuxième hauteur (62) a une plus petite hauteur, et la partie de troisième hauteur (63) a une encore plus petite hauteur.

6. Mécanisme de type pousser-pousser (15) selon la revendication 4 ou 5, dans lequel la partie de deuxième hauteur (62) est inclinée.

7. Mécanisme de type pousser-pousser (15) selon l'une quelconque des revendications 4 à 6, dans lequel les parties de hauteur (61, 62, 63) sont déterminées de sorte que, pour obtenir des hauteurs d'épaulement plus petites mais efficaces, un mouvement de pivotement correspondant de la partie longitudinale (21) de la tige de commande (2) est obtenu par les parties de hauteur réduites de façon correspondante.

8. Mécanisme de type pousser-pousser (15) selon l'une quelconque des revendications précédentes, dans lequel la surface courbe de commande (3), réalisée en épaulements, assure un trajet prédéfini pour la tige de commande (2), et donc pour le guidage effectif de la tige de commande (2), et dans lequel en outre on utilise une tige de commande (2) qui, par suite d'une force élastique, vise à revenir à sa position médiane et dans lequel les deux premiers épaulements ont des hauteurs plus faibles que le dernier épaulement qui est requis pour le rappel de la tige de commande dans la position de départ (position de base).

9. Mécanisme de type pousser-pousser (15) selon la revendication 8, dans lequel une ou plusieurs des parties de hauteur peuvent avoir des hauteurs différentes dans la direction de la poussée.

10. Mécanisme de type pousser-pousser (15) selon l'une quelconque des revendications précédentes, dans lequel la tige de commande (2) est reliée à un coulisseau (20) à verrouillage positif.

11. Mécanisme de type pousser-pousser (15) selon la revendication 10, dans lequel la tige de commande (2) est montée sur le coulisseau (20) de sorte que la tige de commande est munie d'une butée dans la direction allant vers le haut ainsi que vers les côtés de sorte que la tige de commande (2) tente toujours de revenir à sa position médiane ou centrale.

12. Mécanisme de type pousser-pousser (15) selon la revendication 10 ou 11, dans lequel la tige de commande (2) est insérée dans le coulisseau (20) de sorte que la tige de commande peut être, sur la base d'une courbure prédéfinie, pressée sous une prétension de façon permanente vers le bas de la surface courbe de commande.

13. Mécanisme de type pousser-pousser (15) selon l'une quelconque des revendications 10 à 12, dans lequel le coulisseau (20) est, vers son avant, fendu et comprend une traversée vers le haut de sorte que la tige de commande (2) peut être insérée par un mouvement pivotant dans le trou traversant du coulisseau (20).

14. Mécanisme de type pousser-pousser (15) selon l'une quelconque des revendications 10 à 13, dans lequel la tige de commande (2) est montée par des moyens de blocage, par exemple des ergots de blocage, au niveau du coulisseau de sorte que la tige de commande ne peut pas être entraînée en rotation en dehors du coulisseau et dans lequel la tige de commande (2) est en acier à ressort et comporte une partie longitudinale (21) avec une extrémité de tige de montage (24) et une extrémité de tige de guidage (23).

15. Mécanisme de type pousser-pousser (15) selon l'une quelconque des revendications 10 à 14, dans lequel le coulisseau (20) comprend un bras longitudinal (25) ainsi qu'un bras transverse (26) s'étendant transversalement au bras longitudinal, et dans lequel le coulisseau (20) comprend des éléments de guidage s'étendant vers le bas (par exemple 29) qui s'étendent dans des fentes de guidage respectives dans le support de contact (10).
